# FASCICULE DE BREVET EUROPEEN

(11) **EP 1 291 685 B1**
(45) Date de publication et mention de la délivrance du brevet: **01.12.2010**
(21) Numéro de dépôt: 02291822.1
(22) Date de dépôt: 18.07.2002
(51) Int. Cl.: G02B 6/02

(54) **Fibre à changement continu de dispersion chromatique**
Optische Faser mit kontinuierlich veränderlicher chromatischer Dispersion
Optical fibre with continuously varying chromatic dispersion

(30) Priorité: 16.08.2001 FR 0110849
(43) Date de publication de la demande: 12.03.2003
(73) Titulaire: Draka Comteq B.V., 1083 HJ Amsterdam (NL)
(72) Inventeur: Fleury, Ludovic, 78390 Bois d'Arcy (FR); De Montmorillon, Louis-Anne, 75017 Paris (FR); Sillard, Pierre, 78150 Le Chesnay (FR); Nouchi, Pascale, 78600 Maisons-Lafitte (FR)
(74) Mandataire: Blokland, Arie

(56) Documents cités:
- EP-A- 0 724 171
- EP-A- 0 789 256
- EP-A- 1 113 314
- US-A- 5 483 612
- US-A- 5 925 163
- PATENT ABSTRACTS OF JAPAN vol. 1999, no. 11, 30 septembre 1999 (1999-09-30) & JP 11 160744 A (NIPPON TELEGR &TELEPH CORP <NTT>), 18 juin 1999 (1999-06-18)
- BOGATYREV V A ET AL: "A single-mode fiber with chromatic dispersion varying along the length" JOURNAL OF LIGHTWAVE TECHNOLOGY, IEEE. NEW YORK, US, vol. 9, no. 5, mai 1991 (1991-05), pages 561-566, XP002173478 ISSN: 0733-8724
- NAKAJIMA K ET AL: "FOUR-WAVE MIXING SUPPRESSION EFFECT OF DISPERSION DISTRIBUTED FIBERS" JOURNAL OF LIGHTWAVE TECHNOLOGY, IEEE. NEW YORK, US, vol. 17, no. 10, octobre 1999 (1999-10), pages 1814-1822, XP001033240 ISSN: 0733-8724
- KOZUHITO TAJIMA: "COMPENSATION OF SOLITON BROADENING IN NONLINEAR OPTICAL FIBERS WITHLOSS" OPTICS LETTERS, OPTICAL SOCIETY OF AMERICA, WASHINGTON, US, vol. 12, no. 1, 1987, pages 54-56, XP000575387 ISSN: 0146-9592

## Description

La présente invention concerne le domaine des transmissions par fibre optique, et plus spécifiquement, la compensation de la dispersion chromatique et de la pente de dispersion chromatique dans des systèmes de transmission par fibre optique.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 10 Gbit/s; l'objectif est d'obtenir, pour toutes les valeurs de longueur d'onde du multiplex, une dispersion chromatique cumulée sensiblement nulle sur la liaison, de sorte à limiter l'élargissement des impulsions. Sur l'ensemble d'un système de transmission, une valeur cumulée de quelques centaines de ps/nm pour la dispersion est acceptable. Il est aussi intéressant d'éviter au voisinage des longueurs d'onde utilisées dans le système les valeurs nulles de la dispersion chromatique, pour lesquelles les effets non-linéaires sont plus importants. Enfin, il est aussi intéressant de limiter la pente de dispersion chromatique sur la plage du multiplex de sorte à éviter ou limiter les distorsions entre les canaux du multiplex. Ce problème de compensation de la dispersion chromatique et de la pente de la dispersion chromatique est particulièrement aigu pour les systèmes de transmission à très haut débit - typiquement pour les systèmes de transmission à multiplexage en longueur d'onde avec un débit par canal de 40 Gbit/s et au-delà. Le problème est d'autant plus aigu que la largeur de bande augmente et atteint des valeurs supérieures ou égales à 30 nm, voire 35 nm.

On utilise classiquement comme fibre de ligne pour les systèmes de transmissions à fibres optiques des fibres à saut d'indice, appelée aussi fibres SMF (acronyme de l'anglais "Single Mode Fiber"). La demanderesse commercialise ainsi sous référence ASMF 200 une fibre monomode à saut d'indice présentant une longueur d'onde λ₀ d'annulation de la dispersion chromatique entre 1300 et 1320 nm, et une dispersion chromatique inférieure ou égale à 3,5 ps/(nm.km) dans une plage de 1285-1330 nm, et de 17 ps/(nm.km) à 1550 nm. La pente de dispersion chromatique à 1550 nm est de l'ordre de 0,06 ps/(nm².km).

Sont aussi apparues sur le marché des fibres à dispersion décalée, ou DSF (acronyme de l'anglais "Dispersion shifted fibers"). Ces fibres sont telles qu'à la longueur d'onde de transmission à laquelle elles sont utilisées, qui est en général différente de la longueur d'onde de 1,3 µm pour laquelle la dispersion de la silice est sensiblement nulle, la dispersion chromatique est sensiblement nulle; c'est à dire que la dispersion chromatique de la silice, non nulle, est compensée - d'où l'emploi du terme décalé - par une augmentation de l'écart d'indice Δn entre le coeur de la fibre et la gaine optique. Cet écart d'indice permet de décaler la longueur d'onde pour laquelle la dispersion chromatique est nulle; il est obtenu par l'introduction de dopants dans la préforme, lors de la fabrication de celle-ci, par exemple par un processus de MCVD connu en soi, et qui n'est pas décrit plus en détail ici.

On qualifie de NZ-DSF+ (acronyme de l'anglais "non-zero dispersion shifted fibers") des fibres à dispersion décalée, présentant une dispersion chromatique non-nulle et positive pour les longueurs d'onde auxquelles elles sont utilisées. Ces fibres présentent pour ces longueurs d'onde une dispersion chromatique faible, typiquement inférieure à 10 ps/(nm.km) à 1550 nm, et une pente de dispersion chromatique entre 0,04 et 0,1 ps/(nm².km).

Le document BOGATYREV V A ET AL: "A single-mode fiber with chromatic dispersion varying along the length" JOURNAL OF LIGHTWAVE TECHNOLOGY, IEEE. NEW YORK, US, vol. 9, no. 5, mai 1991 (1991-05), pages 561-566 décrit une fibre dont la dispersion chromatique décroît le long de la fibre entre une valeur de 10 ps/(nm.km) et 0.8 ps/(nm.km). Ce document propose un profil d'indice en triangle et la décroissance de la dispersion chromatique est obtenue en changeant le diamètre externe de la fibre.

Le document KOZUHITO TAJIMA: "COMPENSATION OF SOLITON BROADENING IN NONLINEAR OPTICAL FIBERS WITHLOSS" OPTICS LETTERS, OPTICAL SOCIETY OF AMERICA, WASHINGTON, US, vol. 12, no. 1, 1987 , pages 54-56 décrit une fibre dont la dispersion chromatique varie le long de la fibre entre les valeurs de 20 ps/ (nm.km) et 0 ps/(nm.km). Ce document propose un profil d'indice en échelon.

FR-A-2790107 propose une fibre de ligne, tout particulièrement adaptée à une transmission à multiplexage en longueurs d'onde dense, avec un espacement entre les canaux de 100 GHz ou moins pour un débit par canal de 10 Gbit/s; cette fibre présente pour une longueur d'onde de 1550 nm une aire effective supérieure ou égale à 60 µm², une dispersion chromatique comprise entre 6 et 10 ps/(nm.km), et une pente de dispersion chromatique inférieure à 0,07 ps/(nm².km).

Pour compenser la dispersion chromatique et la pente de dispersion chromatique dans des fibres SMF ou NZ-DSF+ utilisées comme fibres de ligne, il est connu d'utiliser des faibles longueurs de fibre de compensation de dispersion ou DCF (Dispersion Compensating Fiber en langue anglaise). Un exemple d'un tel système de transmission, dans lequel la dispersion chromatique dans une fibre de ligne SMF est compensée par de la fibre DCF est décrit dans M. Nishimura et autres, Dispersion compensating fibers and their applications, OFC'96 Technical Digest ThA1. Un tel usage d'une fibre de compensation de dispersion est aussi mentionné dans L. Grüner-Nielsen et autres, Large volume Manufacturing of dispersion compensating fibers, OFC'98 Technical Digest TuD5. Un inconvénient de ce type de fibre est son coût élevé.

Des fibres DCF sont décrites dans différents brevets. Elles présentent au voisinage d'une longueur d'onde de 1550 nm une dispersion chromatique négative, pour compenser la dispersion chromatique cumulée dans la fibre de ligne, et peuvent en outre présenter une pente de la dispersion chromatique négative pour compenser la pente positive de la dispersion chromatique de la fibre de ligne. US-A-5 568 583 ou US-A-5 361 319 proposent une fibre DCF pour la compensation de la dispersion chromatique d'une fibre SMF, d'une dispersion de l'ordre de 17 ps/(nm.km) à 1550 nm. WO-A-99 13366, EP-A-0 674 193 ou encore US-A-5 838 867 donnent d'autres exemples de fibres de compensation de dispersion, pour des fibres à dispersion décalée. Le problème de ces fibres DCF est leur coût, ainsi que l'atténuation qu'elles induisent dans le système.

Il a été proposé sous l'appellation DMF (acronyme de l'anglais "Dispersion Managed Fiber" ou fibre à gestion de dispersion) des fibres présentant des dispersions variant avec la longueur. Ces fibres sont une alternative à l'utilisation de fibre de compensation de dispersion. Une des solutions proposées est de former une fibre avec des sections adjacentes présentant des dispersions chromatiques et des pentes de dispersion chromatique opposées, et des régions de transition entre les différentes sections aussi courtes que possible. De telles fibres sont notamment proposées dans EP-A-0 737 873, US-A-5 887 105, EP-A-0 949 520, EP-A-0 949 519, WO-A-99 57822, WO-A-99 42 869. Elles permettent de limiter les effets non linéaires, la dispersion chromatique restant forte sauf dans les régions de transition qui sont d'une longueur réduite; le choix des longueurs des sections et de la dispersion chromatique de ces sections permet de contrôler la dispersion chromatique totale de la fibre.

T. J. Atwood et W. K. Adcox, Designing a large effective area fiber for submarine systems (NFOEC'99, National Fiber Optics Engineer Conference), insiste sur l'importance de la surface effective pour réduire les effets non-linéaires; ce document indique que la longueur effective des interactions non-linéaires est de l'ordre de 20 km pour des fibres SMF. Ce document propose aussi un profil de dispersion idéal pour un système de transmission.

Pour des transmissions par signaux RZ de type solitons, il a aussi été proposé de faire décroître exponentiellement la dispersion chromatique de la fibre de transmission en fonction de la longueur de la fibre; les fibres sont qualifiées de DDF (en anglais, Dispersion Decreasing Fiber ou fibre à dispersion décroissante). Cette variation de la dispersion chromatique le long de la fibre permet de conserver un régime soliton lors de la propagation le long de la fibre, malgré l'atténuation des signaux. EP-A-0 664 464 propose ainsi une fibre avec une variation progressive du profil d'indice entre les deux extrémités de la fibre. Pour permettre une transmission en régime soliton, la fibre présente à une extrémité une dispersion positive et à l'autre extrémité une dispersion nulle ou très faible. La fibre est obtenue en fabriquant une préforme avec un profil variable, pour obtenir après fibrage une fibre avec un diamètre constant. La fibre est utilisée comme fibre de ligne dans un système de transmission à signaux solitons. EP-A-0 789 256 propose aussi une fibre à dispersion décroissante pour des transmissions en régime soliton. Plutôt que de faire varier continûment les caractéristiques de la fibre, ce document propose de prévoir des sauts discrets de dispersion chromatique le long de la fibre pour approximer une décroissance exponentielle de la dispersion chromatique de la fibre. WO-A-98 25861 propose un procédé de fabrication d'une telle fibre à saut d'indice.

EP-A-0 518 749 propose une fibre à saut d'indice présentant des caractéristiques de propagation variables, avec l'objectif de réduire la rétrodiffusion par effet Brillouin, même lorsque l'intensité de la lumière injectée dans la fibre augmente. Il est proposé en conséquence de faire varier le long de la fibre le diamètre de coeur, l'indice de réfraction du coeur, la composition du verre et la tension résiduelle dans le coeur. Les variations proposées dans les exemples sont des variations périodiques.

Les fibres à dispersion décroissante proposées dans l'état de la technique, et notamment dans le document conviennent pour des signaux solitons. Par rapport à cet état de la technique, le problème de l'invention est celui de la compensation de la dispersion chromatique dans les systèmes de transmission, et notamment dans les systèmes de transmission terrestres à signaux non-solitons. L'invention propose une solution permettant de limiter la compensation chromatique totale dans le système de transmission, et partant, la longueur de fibre de compensation de dispersion nécessaire. Un autre problème qui se pose dans l'état de la technique, et qui est résolu dans certains modes de réalisation de l'invention, est celui de la fabrication de fibres dont les caractéristiques de propagation varient avec la longueur; la solution proposée dans WO-A-98 25861 implique de compenser la conicité de la préforme, ce qui complique le processus de fabrication.

A cet effet, l'invention propose une fibre dont la dispersion chromatique varie en fonction de la longueur. A sa première extrémité, la fibre présente une dispersion chromatique plus importante qu'à sa deuxième extrémité. En outre, sur au moins une partie de la longueur de la fibre, la dispersion chromatique de la fibre diminue, avec une décroissance régulière ou localisée.

La fibre s'utilise notamment comme fibre de ligne au début d'un tronçon dans un système de transmission, entre deux répéteurs; la valeur de la dispersion chromatique au voisinage de la première extrémité de la fibre permet de limiter les effets non-linéaires lorsque les signaux transmis de la fibre présentent encore une puissance importante. La décroissance de la dispersion chromatique permet une transition vers une fibre de ligne à dispersion chromatique plus faible - qui peut d'ailleurs faire partie de la fibre. L'ensemble présente une dispersion chromatique cumulée plus faible que la fibre de ligne de l'état de la technique, ce qui limite le besoin de compensation de la dispersion chromatique.

Plus précisément l'invention propose une fibre optique selon la revendication 1.

De préférence, la fibre présente au voisinage de sa première extrémité une première partie dans laquelle la dispersion chromatique est supérieure ou égale en moyenne à 6 ps/(nm.km). Cette première partie peut présenter une longueur supérieure ou égale à 10 km; dans cette première partie, le taux de variation longitudinale de la dispersion chromatique est de préférence compris entre -1,4 et +0,1 ps/(nm.km²).

Dans un exemple de mise en oeuvre de l'invention, le taux de variation de dispersion chromatique le long de la fibre est sensiblement constant. Ce taux peut être compris entre -1,4 et -0,05 ps/(nm.km²).

Il est aussi possible de prévoir que la variation de dispersion chromatique s'effectue sensiblement complètement dans une partie de la fibre présentant une longueur inférieure à la longueur totale de la fibre. Dans un premier exemple, la longueur de la partie de la fibre où la dispersion chromatique décroît est comprise entre 10 et 35 km. Dans ce cas, il est préférable que le taux de variation longitudinale de la dispersion chromatique dans la partie de la fibre où la dispersion chromatique décroît soit compris entre -1,4 et -0,07 ps/(nm.km²).

Il est aussi possible que la longueur de la partie de la fibre où la dispersion chromatique décroît soit comprise entre 1 et 5 km. Dans ce cas, il est avantageux que le taux de variation longitudinale de la dispersion chromatique dans la partie de la fibre où la dispersion chromatique décroît soit compris entre -14 et -0,5 ps/(nm.km²).

Dans tous les cas, la fibre peut présenter au voisinage de sa deuxième extrémité une deuxième partie dans laquelle la dispersion chromatique est inférieure ou égale à 14 ps/(nm.km). Cette deuxième partie peut présenter une longueur supérieure ou égale à 1 km.

La fibre présente en tout point un profil d'indice en rectangle avec une tranchée déprimée et un anneau. Dans ce cas, les rayons du rectangle, de la tranchée déprimée et de l'anneau soient identiques le long de la fibre.

L'invention propose aussi un système de transmission, avec au moins un répéteur et une telle fibre recevant par sa première extrémité les signaux amplifiés dans le répéteur. On peut encore prévoir une fibre à dispersion sensiblement constante connectée à la deuxième extrémité de cette fibre.

D'autres caractéristiques et avantages de l'invention apparaîtront à la lecture de la description qui suit de modes de réalisation de l'invention, donnés à titre d'exemple et en référence aux dessins annexés, qui montrent :
- figure 1, un exemple de système de transmission utilisant une fibre selon l'invention;
- figure 2, une représentation schématique de la dispersion chromatique,de la pente de dispersion chromatique et du rayon de mode en fonction de la longueur de la fibre dans un mode de réalisation de l'invention;
- figure 3, un exemple de l'allure générale du profil d'une fibre selon l'invention;
- figure 4, une représentation des caractéristiques de propagation de la fibre de la figure 2;
- figure 5, un graphe montrant l'efficacité du mélange quatre ondes dans un système du genre de celui de la figure 1, avec une fibre du genre de celle de la figure 2;
- figures 6, 7 et 8, des représentations similaires à celles des figures 2, 4 et 5, pour un deuxième mode de réalisation d'une fibre selon l'invention.

L'invention propose une fibre présentant à sa première extrémité une dispersion chromatique comprise entre +6 et +17 ps/(nm.km) et à sa deuxième extrémité une dispersion chromatique comprise entre +3 et +14 ps/(nm.km). Entre ces deux extrémités, la dispersion chromatique décroît d'au moins 2,5 ps/(nm.km). La première extrémité de la fibre, pour laquelle la dispersion chromatique est la plus importante, correspond en fonctionnement à l'extrémité d'entrée de la fibre. La fibre est de ce point de vue orientée.

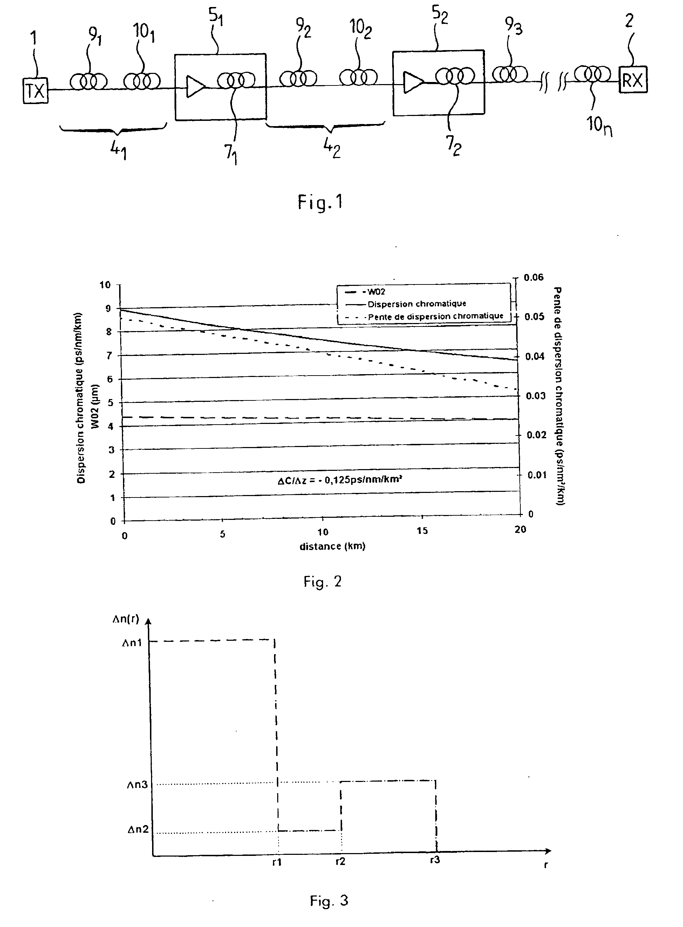

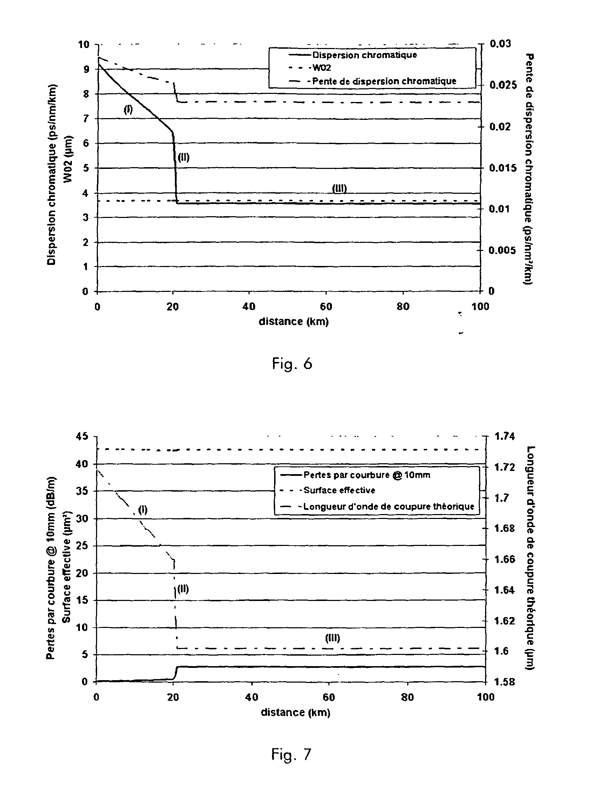

Dans la suite sont décrits divers modes de réalisation de l'invention. Dans le premier mode de réalisation, décrit en référence aux figures 2 à 5, le taux de variation de la dispersion chromatique le long de la fibre est sensiblement constant, d'une extrémité de la fibre à l'autre. Dans le second mode de réalisation, décrit en référence aux figures 6 à 8, la dispersion chromatique varie plus fortement dans une partie de la fibre; autrement dit, la variation de la dispersion chromatique n'est pas répartie le long de la fibre, mais est plus localisée. Dans ces modes de réalisation, la fibre ne présente pas de soudures: elle peut être obtenue par étirage d'une préforme dont les caractéristiques du dépôt par CVD ou VAD (épaisseur des couches déposées et/ou taux de dopants) varient le long de son axe. Dans le cas du MCVD, on obtient des variations de la dispersion chromatique qui peuvent se produire dans la fibre sur des longueurs de 10 km ou plus. Le MCVD est donc particulièrement adapté à la réalisation de fibres avec un taux longitudinal de variation de la dispersion chromatique constant et relativement faible. Dans le cas du VAD, on peut obtenir des variations de la dispersion chromatique qui peuvent se produire dans la fibre sur des longueurs de 1 km ou plus. Le VAD est donc particulièrement adapté à la réalisation de fibres présentant une zone limitée dans laquelle la dispersion chromatique varie avec un taux plus important.

La fibre peut aussi être obtenue par étirage d'une préforme dont le coeur a été modifié par meulage et rechargée en silice par dépôt plasma à flux non constant comme décrit dans EP 0737873A2; on rencontre alors dans la fibre étirée des variations brutales des caractéristiques optiques, typiquement sur des longueurs de fibre étirée de l'ordre de 1 à 5 km, avec des taux de variation longitudinale de la dispersion chromatique qui restent dans les plages mentionnées plus bas.

Dans le cas d'une préforme à coeur modifié comme dans le cas d'une variation des caractéristiques de dépôt le long de la préforme, on évite les pertes provoquées par l'assemblage de fibres. L'absence de soudures le long de la fibre est une caractéristique qui est visible pour l'homme du métier, tant par l'analyse visuelle de la fibre que par l'analyse des caractéristiques de propagation dans la fibre: une soudure peut provoquer une variation discontinue de la dispersion chromatique. Au niveau de la soudure, on passe alors de la valeur de dispersion chromatique de la première fibre soudée à la valeur de la dispersion chromatique de la deuxième fibre soudée.

Au contraire, en faisant varier les caractéristiques de la préforme, on peut dire que la dispersion chromatique le long de la fibre étirée est continue - i.e. sans variations marquées de la dispersion chromatique sur des longueurs de l'ordre de quelques centimètres. Les distances caractéristiques proposées plus haut sont au moins de l'ordre du km.

Au voisinage de sa première extrémité, i.e. en fonctionnement à son extrémité d'entrée des signaux optiques, la fibre présente une dispersion chromatique plus importante. Du fait de la forte valeur de la dispersion chromatique de la fibre au voisinage de sa première extrémité, les effets non-linéaires FWM (Four Wave Mixing) et les effets de modulation de phase croisée XPM restent limités en amplitude; de ce point de vue, la valeur de dispersion chromatique au voisinage de la première extrémité de la fibre est de préférence voisine de la valeur de dispersion chromatique d'une fibre de ligne classique, comme une fibre SMF ou NZ-DSF. La fibre de l'invention peut ainsi être connectée en sortie d'un répéteur, en lieu et place d'une fibre de ligne classique, sans que les effets non-linéaires n'augmentent de façon trop importante. Il n'est pas non plus nécessaire de ce point de vue d'adapter le répéteur pour connecter la fibre de l'invention.

Avantageusement, la dispersion chromatique moyenne dans la fibre est supérieure à une valeur de +6 ps/(nm.km), sur une longueur d'au moins 10 km. Ces valeurs seuil de la dispersion chromatique et de la longueur peuvent être choisies en fonction de la puissance du signal en entrée et des effets non-linéaires: comme expliqué dans l'article de Atwood et Atcox cité plus haut, les effets non-linéaires dépendent de la surface effective, de l'intensité du signal et de la dispersion chromatique; leur incidence diminue avec la longueur de propagation; il est donc possible après une distance de propagation suffisante, lorsque les niveaux de puissance des signaux ont diminué, de faire aussi diminuer la valeur de la dispersion chromatique. Cette diminution de la valeur de la dispersion chromatique n'entraîne pas une augmentation importante des pénalités provoquées par les effets non-linéaires. Dans cette première partie de la fibre, la dispersion chromatique n'est pas nécessairement constante: elle peut augmenter ou diminuer. Il est toutefois avantageux que le taux de variation longitudinale soit inférieur en valeur absolue à 0,6 ps/(nm.km²). En effet, la dispersion chromatique de la première partie de la fibre est ajustée de sorte que, d'une part, les pénalités dues aux effets non-linéaires restent inférieures à un certain seuil déterminé par les performances visées du système de transmission et, d'autre part, que la dispersion chromatique cumulée reste minimale. La dispersion chromatique locale doit donc varier lentement dans la première partie de la fibre afin de vérifier ces deux contraintes. Il est néammoins avantageux que la dispersion chromatique diminue lentement (avec un taux inférieur à +0,6 ps/nm²/km en valeur absolue) dans cette première section de la fibre afin que la dispersion chromatique cumulée sur cette partie soit minimisée, à condition toutefois que les effets linéaires soient maintenus en dessous du seuil introduit précedemment.

La dispersion chromatique peut ensuite diminuer. Cet ajustement de la dispersion chromatique à une valeur plus faible que la première partie de la fibre limite la dispersion chromatique cumulée dans le reste de la fibre et du tronçon. On notera en effet qu'il est possible que la fibre soit reliée à une fibre de dispersion chromatique plus faible - comme dans l'exemple du premier mode de réalisation - ou encore que la fibre présente une partie de dispersion chromatique plus faible jusqu'à sa seconde extrémité, comme dans le deuxième mode de réalisation. Le profil de la figure 2 pourrait ainsi être complété par une partie de fibre de dispersion constante.

La valeur de la dispersion chromatique en sortie de la fibre dépend du système de transmission. Cette valeur doit être suffisamment élevée de sorte à limiter les effets non-linéaires : une borne inférieure de 2,5 ps/(nm.km) convient. La dispersion chromatique à la deuxième extrémité de la fibre est inférieure à la valeur de dispersion chromatique à la première extrémité de la fibre, de sorte à faire diminuer la valeur de dispersion chromatique cumulée sur la longueur de la fibre. Une différence entre la valeur de la dispersion chromatique à la première extrémité et une valeur de la dispersion chromatique à la seconde extrémité supérieure ou égale à 2,5 ps/(nm.km) assure une bonne réduction de la dispersion chromatique cumulée. On peut aussi, en considérant la valeur moyenne de la dispersion chromatique dans la première partie, imposer que la différence entre la valeur moyenne de la dispersion chromatique dans la première partie et la dispersion chromatique à la deuxième extrémité de la fibre soit supérieure ou égale à 2,5 ps/(nm.km).

La figure 1 montre une représentation schématique d'un système de transmission selon l'invention. On a représenté sur la figure un émetteur TX 1 et un récepteur RX 2. Ces deux éléments sont reliés par une pluralité de tronçons de fibre de ligne 4₁ à 4ₙ. On entend ici par fibre de ligne la fibre s'étendant le long du système de transmission, et dont la longueur correspond sensiblement à la longueur du système. Entre les tronçons sont disposés des répéteurs 5₁ à 5ₙ₋₁. Un répéteur comprend typiquement un amplificateur à fibre dopée à l'erbium; on peut aussi y prévoir une section de fibre de compensation de dispersion 7ᵢ. Ne sont pas portés à la figure les filtres et autres éléments sans incidence directe sur le fonctionnement de l'invention.

Au moins un tronçon de fibre de ligne - de préférence tous les tronçons - sont formés d'une section 9ᵢ de fibre selon l'invention, qui est connectée à la sortie du répéteur, puis d'une section de fibre 10ᵢ présentant une dispersion chromatique sensiblement constante.

Le fonctionnement du système de transmission de la figure est le suivant. Les signaux transmis sont amplifiés dans un répéteur5ᵢ₋₁; à la sortie du répéteur, les signaux sont d'abord transmis à travers la première partie de la fibre 9ᵢ, dans laquelle la dispersion chromatique est suffisamment élevée pour limiter les effets non-linéaires; les signaux sont ensuite transmis dans la deuxième partie, dans laquelle la dispersion chromatique décroît rapidement. Les signaux pénètrent ensuite dans la deuxième section 10ⱼ de fibre de ligne, où ils sont transmis jusqu'au répéteur suivant.

La dispersion chromatique cumulée dans un tronçon de la fibre de ligne est plus faible dans le système de la figure 1 que dans un système selon l'état de la technique. On considère à titre de comparaison un système de transmission utilisant comme fibre de ligne de la fibre NZ-DSF d'une dispersion chromatique de l'ordre de 8 ps/(nm.km) à 1550 nm. Pour un tronçon entre répéteurs de 100 km, la dispersion chromatique cumulée est de l'ordre de 800 ps/nm sur un canal à 1550 nm; pour une pente de dispersion chromatique voisine de 0.058 ps/(nm².km) à 1550 nm, la différence de dispersion chromatique cumulée entre deux canaux séparés de 30 nm, l'un centré à 1550 nm et l'autre à 1580 nm est de l'ordre de 174 ps/nm.

On considère un système du genre de celui de la figure 1. La fibre de la première section 9ⱼ présente une longueur totale de 20 km; à sa première extrémité, elle présente une dispersion chromatique de 9 ps/(nm.km) et à sa deuxième extrémité une dispersion chromatique de 4 ps/(nm.km). La dispersion chromatique à 1550 nm décroît de 9 à 6,5 ps/(nm.km) sur une longueur de 20 km à raison de - 0,125 ps/(nm.km²); la deuxième section de la fibre est une fibre NZ-DSF d'une dispersion chromatique constante de 4 ps/(nm.km) à 1550 nm. La dispersion chromatique cumulée dans le tronçon est de l'ordre de 475 ps/(nm.km) à 1550 nm. La pente de dispersion chromatique moyenne dans la première partie de la fibre 9ᵢ est de l'ordre de 0,042 ps/(nm².km) à 1550 nm, tandis qu'elle est de l'ordre de 0,024 dans la fibre 10ᵢ de la deuxième section. Sur l'ensemble du tronçon, la différence de dispersion chromatique cumulée entre deux canaux séparés de 30 nm, l'un centré à 1550 nm et l'autre à 1580 nm est de l'ordre de 83 ps/(nm.km).

Par rapport au système de transmission utilisé comme élément de comparaison, l'invention permet de limiter la longueur de la fibre de dispersion de compensation nécessaire pour compenser la dispersion chromatique cumulée dans la fibre de ligne et de réduire par conséquent les pertes en ligne. Par exemple, avec une fibre DCF caractérisée à 1550 nm par une dispersion chromatique de -100 ps/nm/km et une atténuation de 0,5 dB/km, l'invention permet de diminuer d'un facteur d'environ 1,7 la longueur de la fibre de compensation de dispersion à utiliser dans le système et permet donc de réduire les pertes en ligne de 1,63 dB environ. Cette diminution peut être obtenue par une diminution de la longueur de fibre dans chacun des répéteurs présentant de la fibre de compensation de dispersion, mais on peut aussi diminuer le nombre de sections de fibre de compensation de dispersion dans le système de transmission.

On notera ici que l'on pourrait prévoir une section de fibre à dispersion constante entre la sortie d'un répéteur et la fibre de la figure 1; ceci est sans effet sur le fonctionnement de la fibre de l'invention et augmente la dispersion chromatique cumulée ainsi que le nombre de soudures entre fibres. Il est clair aussi que l'on peut utiliser un autre type de dispositif de compensation de dispersion que de la fibre de compensation de dispersion, et par exemple des réseaux de Bragg ou autres; il est aussi possible que la fibre de compensation de dispersion soit utilisée comme fibre de ligne. Dans tous les cas, l'invention permet de limiter la dispersion chromatique cumulée à compenser.

Dans l'exemple de la figure 1, la fibre 10ᵢ de la deuxième section pourrait aussi bien être intégrée à la fibre 9ᵢ de l'invention. Ceci permettrait de limiter encore les pertes provoquées par la soudure des deux sections de fibre.

On décrit maintenant les caractéristiques de propagation préférées de la fibre de l'invention, avant d'en donner un mode de réalisation. Ces caractéristiques de propagation sont mesurées à 1550 nm, sauf indications contraires :
- une longueur d'onde de coupure mesurée sur 2 m inférieure à 1550 nm;
- une longueur d'onde de coupure en câble inférieure à 1300 nm;
- une aire effective supérieure à 40 µm², de préférence supérieure à 45 µm²;
- sensibilité aux micro-courbures inférieure à 1, ou de préférence inférieure ou égale à 0,5;
- un diamètre de mode supérieur à 4 µm;
- des pertes par courbure inférieures à 10⁻³ dB pour 100 tours à un rayon de 30 mm.
- des pertes par courbure inférieures à 20 dB/m pour une boucle de rayon 10 mm.

Avec une longueur d'onde de coupure effective selon la norme UIT-T G650 inférieure à 1550 nm, le fonctionnement monomode de la fibre dans les bandes C et L est assuré. La sensibilité de la fibre aux micro-courbures est évaluée de façon relative, par rapport à la fibre commercialisée par la demanderesse sous la référence ASMF 200; on peut employer la méthode d'écrasement de la fibre entre deux grilles, connue en soi.

Les pertes par courbures sont évaluées, de façon connue en soi, en mesurant les pertes engendrées par l'enroulement de la fibre. On peut par exemple entourer 100 tours de la fibre autour d'un manchon de 30 mm de rayon, et mesurer les pertes induites par l'enroulement; on peut aussi simplement former une boucle de fibre autour d'un manchon de 10 mm de rayon, et mesurer les pertes linéaires. Les limites sur les pertes par courbure assurent que la fibre de l'invention supporte bien la mise en câble.

La figure 2 montre une représentation schématique de la dispersion chromatique,de la pente de dispersion chromatique et du rayon de mode en fonction de la longueur de la fibre dans un premier mode de réalisation de l'invention. Sur le graphe, on a porté en ordonnées la dispersion chromatique en ps/(nm.km), le diamètre de mode W02 en µm et la pente de dispersion chromatique en ps/(nm².km). On a porté en abscisses la longueur de la fibre, en km. La longueur de la fibre est mesurée à partir de la première extrémité de la fibre, qui est donc représentée sur la partie gauche de la figure.

Comme le montre la figure, la dispersion chromatique varie continûment et régulièrement depuis une valeur de 9 ps/(nm.km) à la première extrémité jusqu'à une valeur de 6,5 ps/(nm.km) à la seconde extrémité. Cette décroissance correspond à un taux de variation de la dispersion chromatique de -0,125 ps/(nm.km²). La pente de dispersion chromatique varie de 0,053 ps/(nm².km) à 0,031 ps/(nm².km). Le diamètre de mode reste sensiblement constant sur toute la longueur de la fibre, avec une valeur voisine de 4 µm. A λ=1,55 µm, la dispersion chromatique et la pente de dispersion chromatique valent en moyenne 7,8 ps/(nm.km) et 0,042 ps/(nm².km), respectivement. Plus généralement, la fibre pourrait présenter une longueur de 10 à 35 km, et présenter un taux de variation longitudinal de la dispersion chromatique compris entre -1,4 et -0,05 ps/(nm.km²). Ces valeurs assurent que la variation de la dispersion chromatique d'une extrémité à l'autre de la fibre est comprise entre 2,5 et 14 ps/(nm.km).

La figure 3 montre une représentation schématique du profil d'indice de consigne d'une fibre selon l'invention; comme indiqué plus haut, dans cet exemple, le profil d'indice est un profil d'indice du type en rectangle, avec une tranchée enterrée et un anneau; les variations de la dispersion chromatique le long de la fibre sont obtenues simplement par variation des valeurs des indices, avec des rayons constants. Le profil présente, en partant du centre de la fibre:
- une partie centrale avec un indice sensiblement constant supérieur ou égal à l'indice de la gaine;
- une partie annulaire d'indice inférieur ou égal à l'indice de la gaine ; l'ensemble constituant un profil d'indice dit "en rectangle avec une tranchée enterrée
ou déprimée".

Autour de la tranchée enterrée, la fibre de la figure 3 présente un anneau, c'est-à-dire une partie d'indice supérieur à l'indice de la gaine, d'où le qualificatif de profil en rectangle avec une tranchée enterrée et un anneau. Le tableau suivant donne les valeurs des indices et rayons qui permettent d'obtenir la fibre de la figure 2. On note r₁ le rayon de la partie centrale de la fibre, r₂ le rayon extérieur de la la tranchée enterrée et r₃ le rayon extérieur de l'anneau.

On note respectivement Δn₁, Δn₂ et Δn₃ les différences respectives de l'indice du rectangle, de la partie enterrée et de l'anneau par rapport à l'indice de la gaine.

Le tableau ci-dessous donne les différentes valeurs de ces paramètres, aux deux extrémités de la fibre de la figure 2. Le tableau montre que la variation des caractéristiques optiques de la fibre peut être obtenue simplement en faisant varier l'indice de la tranchée enterrée. Une telle variation d'indice peut s'obtenir lors de la constitution d'une préforme en faisant varier continuement la concentration des dopants des couches déposées lors de la phase de dépôt par MCVD ou VAD. La variation du profil dans la fibre est qualifiée dans ce qui précède de "continue"; cette "continuité" est dans la pratique fonction de la nature des systèmes de contrôle des concentration en dopant mis en oeuvre pour la constitution de la préforme. En pratique, il s'avère que les caractéristiques optiques de la fibre étirée varient effectivement continûment le long de la fibre.

| **r₁ (µm)** | **r₂ (µm)** | **r₃ (µm)** | **Δn₁x1000** | **Δn₂x1000** | **Δn₃x1000** |
|---|---|---|---|---|---|
| 3,23 | 6,81 | 9,95 | 7,5 | 0 | 2,3 |
| 3,23 | 6,81 | 9,95 | 7,5 | -1,9 | 2,3 |

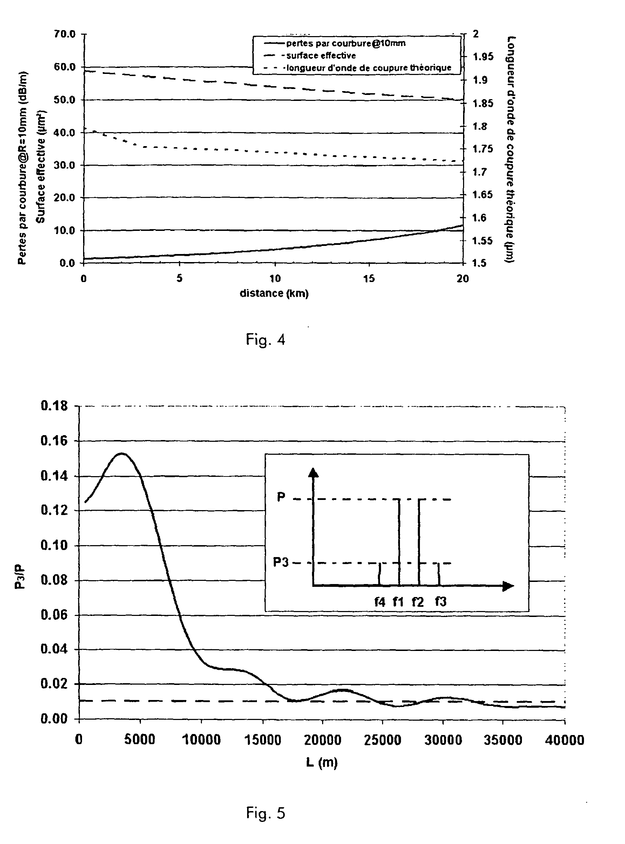

La figure 4 montre une représentation d'autres caractéristiques de propagation de la fibre de la figure 2. On a porté en abscisses la longueur de la fibre, comme à la figure 2. On a porté en ordonnées les pertes par courbure, la surface effective, ainsi que la longueur d'onde de coupure théorique. Le graphe montre que ces différents paramètres varient peu le long de la fibre.

La figure 5 montre une représentation de l'efficacité du mélange à 4 ondes en fonction de la longueur L pour deux canaux séparés par un écart de fréquence égal à 50 GHz et une puissance de 20 dBm par canal. L'encart schématise le processus d'interaction du mélange à 4 ondes, avec la génération des fréquences f3=2f1-f2 et f4=2f2-f1 de puissance P3 par interaction des deux canaux aux fréquence f1 et f2 de puissance P. Le calcul est effectué pour une longueur de tronçon totale de 100 km constituée par L km de la fibre de l'exemple et (100-L) km de fibre à dispersion chromatique à +4ps/nm/km et ayant une surface effective de 43 µm². La ligne horizontale indique le niveau d'efficacité du mélange à 4 ondes dans 100 km de fibre caractérisée par une dispersion chromatique de +7,5ps/nm/km et une surface effective de 60 µm².

La figure 5 montre qu'un tronçon de 100 km constitué par 20 km de fibre de l'exemple et 80 km de fibre caractérisée par une dispersion chromatique constante de +4 ps/nm/km (et une surface effective de 43 µm²) a un niveau de mélange à 4 ondes comparable à celui d'une fibre de 100 km ayant une dispersion chromatique constante de + 7,5 ps/nm/km et une surface effective de 60 µm².

Dans le premier tronçon (20 km de fibre de l'exemple + 80 km de fibre à +4 ps/nm/km et de surface effective égale à 43 µm²), la dispersion chromatique cumulée vaut 475 ps/nm. Sachant que la pente de la dispersion chromatique moyenne vaut respectivement 0,024 et 0,042 ps/nm²/km pour la seconde fibre raboutée et la fibre de l'invention, on obtient une pente de dispersion chromatique moyenne de 0,0276 ps/nm²/km sur les 100 km du tronçon. La différence de dispersion chromatique cumulée entre deux canaux séparés de 30 nm, l'un centré à 1550 nm et l'autre à 1580 nm est par conséquent de l'ordre de 83 ps/nm.

En comparaison, dans un tronçon de 100 km de fibre à +7,5ps/nm/km caractérisée par une pente de dispersion chromatique de 0,058 ps/nm²/km, la dispersion chromatique cumulée vaut 750ps/nm en fin de tronçon et la différence de dispersion chromatique cumulée entre deux canaux séparés de 30 nm, l'un centré à 1550 nm et l'autre à 1580 nm vaut 174 ps/nm. L'utilisation de la fibre de la figure 2 permet donc de réduire notablement la dispersion chromatique cumulée dans la fibre de ligne.

Si on compense la dispersion chromatique cumulée avec de la fibre DCF caractérisée à 1550 nm par une dispersion chromatique de -100 ps/nm/km et une atténuation de 0,5 dB/km, l'invention permet de diminuer d'un facteur d'environ 1,6 la longueur de la fibre de compensation à utiliser dans le système et permet de réduire les pertes en ligne d'environ 1,4 dB. Un autre avantage de l'utilisation de la fibre de l'invention est la forte réduction de la pente de dispersion chromatique moyenne grâce à l'utilisation de fibre à faible dispersion chromatique dans la seconde partie du tronçon.

Comme indiqué plus haut, il est possible d'inclure dans la fibre de l'invention la fibre à faible dispersion chromatique qui est utilisée dans le système de transmission. Cette solution évite une soudure pour former la fibre de ligne.

On décrit maintenant un deuxième mode de réalisation de l'invention, en référence aux figures 6, 7 et 8. Comme indiqué plus haut, dans ce deuxième mode de réalisation, la variation de la dispersion chromatique le long de la fibre n'est pas régulière, mais est concentrée dans une partie de la fibre présentant une longueur inférieure à la longueur totale de la fibre.

La figure 6 est analogue à la figure 2. Elle montre que la fibre présente, au voisinage de la première extrémité, une première partie dans laquelle la dispersion chromatique varie lentement. La fibre présente, au voisinage de sa deuxième extrémité, une deuxième partie dans laquelle la dispersion chromatique est sensiblement constante. Entre ces deux parties, la dispersion chromatique décroît avec un taux de variation longitudinal plus important que dans la première partie. Plus spécifiquement, il est encore avantageux que la première partie présente une longueur supérieure ou égale à 10 km, et un taux de variation longitudinale de la dispersion chromatique compris entre -0,6 et +0,1 ps/nm/km². Il n'est pas indispensable pour l'invention que la dispersion chromatique soit décroissante comme dans l'exemple de la figure.

Au voisinage de la deuxième extrémité, la fibre présente une deuxième partie; celle-ci présente une dispersion chromatique inférieure à 4 ps/(nm.km). La dispersion chromatique cumulée dans la fibre est inférieure à celle d'une fibre de l'état de la technique; comme la puissance des signaux est plus limitée dans cette section de la fibre, les effets non-linéaires ne sont pas pénalisants. Il est aussi avantageux que la dispersion chromatique dans cette seconde partie soit toujours supérieure à 3 ps/(nm.km); il n'est toutefois pas indispensable que la dispersion chromatique soit constante comme dans l'exemple.

Entre ces deux parties, la dispersion chromatique décroît, avec un taux de variation typiquement compris entre -14 et -0,5 ps/(nm.km²). Ces bornes sont déterminées en imposant que la dispersion chromatique diminue d'au moins +2,5 ps/(nm.km) et au plus de +14 ps/(nm.km) sur une distance de 1 à 5 km entre les deux parties de fibre considérées plus haut. Avec de telles valeurs, la réduction de la dispersion chromatique entre les deux parties de la fibre assurent une diminution de la dispersion chromatique cumulée d'au moins 225 ps/nm à au plus 1050 ps/nm lorsque la longueur de la seconde partie est de 75 km. A λ=1,55 µm, la dispersion chromatique et la pente de dispersion chromatique valent en moyenne 4,15 ps/nm/km et 0,024 ps/nm²/km, respectivement. Cet exemple correspond avantageusement à une fabrication de la préforme par le procédé décrit dans EP-A-0 737 873 ou à une fabrication de la préforme par VAD. On peut aussi, notamment dans le cas d'une fibre obtenue par MCVD, prévoir que la dispersion chromatique varie sur une longueur de 10 à 35 km, avec un taux de variation longitudinal compris entre -1,4 et -0,07 ps/(nm.km²).

Ces caractéristiques peuvent être obtenues avec le profil de la figure 3, pour les valeurs des paramètres données dans le tableau ci-dessous. La ligne (I) donne les valeurs à la première extrémité de la fibre, la ligne (II) les valeurs à la fin de la première partie, et la ligne (III) les valeurs dans la deuxième partie. Les rayons r1, r2 et r3 varient homothétiquement entre le début et la fin d'une section. Ces rayons diminuent d'un facteur d'environ 1,035 entre le début et la fin de la section (I) (transition du profil d'indice I au profil d'indice II) et le début et la fin de la section (II) (transition du profil d'indice II au profil d'indice III). La section (III) garde le profil d'indice III. De telles variations des rayons peuvent être obtenues par exemple en faisant varier linéairement le diamètre de la recharge dans les sections de préformes correspondantes aux zones (I) et (II). Dans cet exemple, pour un diamètre de recharge de 60 mm, la section (I) a une longueur de 19 km sur fibre correspondant à une longueur d'environ 9 cm sur préforme, tandis que la section (II) a une longueur de 1 km sur fibre correspondant à une longueur d'environ 0,4 cm sur préforme. La fibre de l'invention est fabriquée sans variations des rayons le long de la fibre.

| Profil | r1 (µm) | r2 (µm) | r3 (µm) | Δn1x1000 | Δn2x1000 | Δn3x1000 |
|---|---|---|---|---|---|---|
| I | 3,32 | 6,22 | 8,9 | 8,6 | -3,65 | 3 |
| II | 3,21 | 6,01 | 8,6 | 8,6 | -3,65 | 3 |
| III | 3,1 | 5,8 | 8,3 | 8,6 | -3,65 | 3 |

La figure 7 est analogue à la figure 4. Elle montre les variations longitudinales et locales des pertes par courbure, de la surface effective et de la longueur d'onde de coupure théorique.

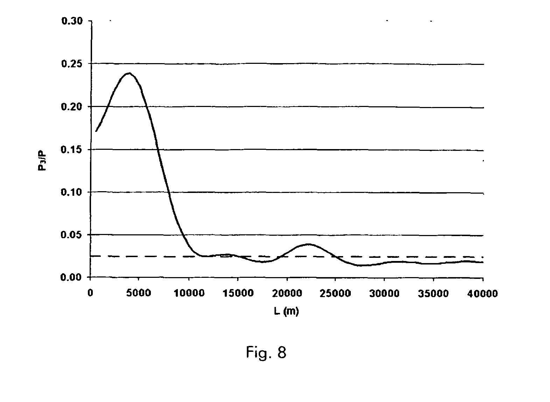

La figure 8 est analogue à la figure 5. Elle montre une représentation de l'efficacité du mélange à 4 ondes en fonction de la longueur L pour deux canaux séparés par un écart de fréquence égal à 50 GHz et une puissance de 20 dBm par canal. Le calcul est effectué pour une longueur de tronçon totale de 100 km en faisant varier la longueur L de la section (I)+(II). La ligne horizontale indique le niveau d'efficacité du mélange à 4 ondes dans 100 km de fibre caractérisée par une dispersion chromatique de +7,5ps/nm/km et une surface effective de 43 µm². Lorsque la longueur de la section (I) + (II) est de l'ordre de 15 km, la figure 8 montre que la fibre de l'exemple a un niveau de mélange à 4 ondes comparable à celui d'une fibre de 100 km caractérisée par une dispersion chromatique de +7,5 ps/nm/km et une surface effective de 43 µm².

Dans cet exemple, la dispersion chromatique cumulée vaut 440 ps/nm. La différence de dispersion chromatique cumulée entre deux canaux séparés de 30 nm, l'un centré à 1550 nm et l'autre à 1580 nm est de l'ordre de 72 ps/nm. Ces valeurs sont à comparer à une fibre de ligne classique, comme plus haut.

Dans les exemples des deux premiers modes de réalisation, les fibres sont d'un seul tenant et sont issues de la même préforme. On peut alors atteindre une variation longitudinale et continue des caractéristiques de transmission en faisant varier linéairement les épaisseurs des couches déposées sur préforme par le procédé CVD ou VAD - comme dans l'exemple du premier mode de réalisation où l'indice Δn₂ décroît linéairement de 0 à -1,9.10⁻³. Les variations longitudinales des caractéristiques de transmission dépendent alors de celles du profil d'indice.

Par rapport à un raboutement des fibres, cette solution évite de réaliser de nombreuses fibres de dispersion chromatique différente - donc une difficulté technique - pour approximer le profil de la figure 2. En outre, cette solution évite les pertes par soudure de toutes les fibres raboutées. Il faut compter pratiquement une perte d'environ 0,1dB par soudure pour des fibres ayant le même diamètre de mode. Dans le deuxième mode de réalisation, utiliser pour la première partie de la fibre une fibre raboutée présente, outre les inconvénients mentionnés à l'instant, l'inconvénient de ne pouvoir faire décroître la dispersion chromatique sur les 20 (environ) premiers kilomètres. Or, comme dans ce deuxième mode de réalisation, la décroissance de la dispersion chromatique dans la première partie permet de réduire la dispersion chromatique cumulée de près de 50 ps/nm. On ne bénéficierait pas de cette réduction de 50 ps/nm en remplaçant la fibre de cet exemple par une fibre à dispersion chromatique constante - qui aurait nécessairement une dispersion chromatique supérieure ou égale à +9 ps/(nm.km) afin de garantir les mêmes non-linéarités cumulées au début du tronçon où la puissance des signaux est maximale.

Il reste néanmoins possible d'utiliser d'autres techniques telles que décrites dans EP 0737873A2 pour obtenir des fibres selon l'invention. On peut procéder par exemple au meulage de la section de coeur de la préforme suivi du dépôt au plasma d'une recharge en silice de sorte à obtenir en final une préforme d'un diamètre constant. Une telle technique permet d'obtenir des variations lentes ou brutales des caractéristiques longitudinales (locales) des fibres obtenues après fibrage de la préforme.

La fibre de l'invention peut être fabriquée par l'homme du métier à l'aide de techniques connues, comme le MCVD, l'OVD ou les autres techniques couramment utilisées pour la fabrication des fibres optiques. On notera par rapport aux procédés de l'état de la technique que la fibre peut être fabriquée sans variation des rayons le long de la fibre. Ceci simplifie considérablement le processus de préparation de la préforme. Il suffit de changer au cours du dépôt la concentration dans le dopant déposé pour faire varier les indices. Mais il n'est pas nécessaire d'obtenir une variation de l'épaisseur de chaque couche déposée.

Bien entendu, la présente invention n'est pas limitée aux exemples et modes de réalisation décrits et représentés, mais elle est susceptible de nombreuses variantes accessibles à l'homme de l'art. On peut utiliser la fibre de l'invention dans d'autres systèmes que ceux représentés à la figure 1; on peut aussi obtenir une fibre selon l'invention avec un profil différent de celui de la figure 3. Dans le premier mode de réalisation comme dans le second, il est possible de choisir d'autres valeurs de dispersion chromatique que celles proposées à titre d'exemple.

## Revendications

1. Une fibre optique présentant à sa première extrémité une dispersion chromatique à 1550nm comprise entre +6 et +17 ps/(nm.km), la dispersion chromatique variant continûment le long de la fibre,
**caractérisée en ce que**
ladite fibre présente à sa deuxième extrémité une dispersion chromatique à 1550nm comprise entre +3 et +14 ps/(nm.km), la différence entre la dispersion chromatique à la première extrémité de la fibre et la dispersion chromatique à la deuxième extrémité de la fibre étant supérieure ou égale à 2,5 ps/(nm.km), et **en ce que** la fibre présente en tout point un profil d'indice en rectangle avec une tranchée déprimée et un anneau, les rayons du rectangle, de la tranchée déprimée et de l'anneau étant identiques le long de la fibre.

2. La fibre selon la revendication 1 **caractérisée en ce qu'**elle présente au voisinage de sa première extrémité une première partie dans laquelle la dispersion chromatique est supérieure ou égale en moyenne à 6 ps/(nm.km).

3. La fibre de la revendication 2, **caractérisée en ce que** la première partie présente une longueur supérieure ou égale à 10 km.

4. La fibre de la revendication 2 ou 3, **caractérisée en ce que** le taux de variation longitudinale de la dispersion chromatique dans la première partie est compris entre-1,4 et +0,1 ps/(nm.km²).

5. La fibre de l'une des revendications 1 à 4, **caractérisée en ce que** le taux de variation de dispersion chromatique le long de la fibre est sensiblement constant.

6. La fibre de la revendication 5, **caractérisée en ce que** le taux présente une valeur comprise entre -1,4 et -0,05 ps/(nm.km²).

7. La fibre de l'une des revendications 1 à 4, **caractérisée en ce que** la variation de dispersion chromatique s'effectue sensiblement complètement dans une partie de la fibre présentant une longueur inférieure à la longueur totale de la fibre.

8. La fibre de la revendication 7, **caractérisée en ce que** la longueur de la partie de la fibre où la dispersion chromatique décroît est comprise entre 10 et 35 km.

9. La fibre de la revendication 8, **caractérisée en ce que** le taux de variation longitudinale de la dispersion chromatique dans la partie de la fibre où la dispersion chromatique décroît est compris entre -1,4 et -0,07 ps/(nm.km²).

10. La fibre de la revendication 7, **caractérisée en ce que** la longueur de la partie de la fibre où la dispersion chromatique décroît est comprise entre 1 et 5 km.

11. La fibre de la revendication 10, **caractérisée en ce que** le taux de variation longitudinale de la dispersion chromatique dans la partie de la fibre où la dispersion chromatique décroît est compris entre -14 et -0,5 ps/(nm.km²).

12. La fibre de l'une des revendications 1 à 4 et 7 à 11, **caractérisée en ce qu'**elle présente au voisinage de sa deuxième extrémité une deuxième partie dans laquelle la dispersion chromatique est inférieure ou égale à 14 ps/(nm.km).

13. La fibre de la revendication 12, **caractérisée en ce que** la deuxième partie présente une longueur supérieure ou égale à 1 km.

14. Un système de transmission, avec au moins un répéteur, une fibre selon l'une des revendications 1 à 13 recevant par sa première extrémité les signaux amplifiés dans le répéteur.

15. Le système de la revendication 14, **caractérisé par** une fibre à dispersion sensiblement constante connectée à la deuxième extrémité de la dite fibre.

## Claims

1. An optical fibre having, at its first end, a chromatic dispersion at 1550 nm of between +6 and +17 ps/(nm.km) inclusive, the chromatic dispersion varying continuously along the fibre,
**characterised in that**
said fibre has, at its second end, a chromatic dispersion at 1550 nm of between +3 and +14 ps/(nm.km) inclusive, the difference between the chromatic dispersion at the first end of the fibre and the chromatic dispersion at the second end of the fibre being greater than or equal to 2.5 ps/(nm.km), and **in that** the fibre has at every point an index profile in the shape of a rectangle with a depressed trench and a ring, the radii of the rectangle, of the depressed trench and of the ring being the same along the fibre.

2. The fibre according to claim 1, **characterised in that** it has, in the vicinity of its first end, a first portion, in which the chromatic dispersion is on average greater than or equal to 6 ps/(nm.km).

3. The fibre of claim 2, **characterised in that** the first portion has a length greater than or equal to 10 km.

4. The fibre of claim 2 or 3, **characterised in that** the rate of longitudinal variation in the chromatic dispersion in the first portion is between -1.4 and +0.1 ps/(nm.km²) inclusive.

5. The fibre of one of claims 1 to 4, **characterised in that** the rate of chromatic dispersion variation along the fibre is substantially constant.

6. The fibre of claim 5, **characterised in that** the rate has a value between -1.4 and -0.05 ps/(nm.km²) inclusive.

7. The fibre of one of claims 1 to 4, **characterised in that** the chromatic dispersion variation is accomplished substantially completely in a portion of the fibre having a length less than the total length of the fibre.

8. The fibre of claim 7, **characterised in that** the length of the portion of the fibre in which the chromatic dispersion decreases is between 10 and 35 km inclusive.

9. The fibre of claim 8, **characterised in that** the rate of longitudinal variation in the chromatic dispersion in the portion of the fibre in which the chromatic dispersion decreases is between -1.4 and -0.07 ps/(nm.km²) inclusive.

10. The fibre of claim 7, **characterised in that** the length of the portion of the fibre in which the chromatic dispersion decreases is between 1 and 5 km inclusive.

11. The fibre of claim 10, **characterised in that** the rate of longitudinal variation in the chromatic dispersion in the portion of the fibre in which the chromatic dispersion decreases is between -14 and -0.5 ps/(nm.km²) inclusive.

12. The fibre of one of claims 1 to 4 and 7 to 11, **characterised in that** it has, in the vicinity of its second end, a second portion, in which the chromatic dispersion is less than or equal to 14 ps/(nm.km).

13. The fibre of claim 12, **characterised in that** the second portion has a length greater than or equal to 1 km.

14. A transmission system, having at least one repeater, a fibre according to one of claims 1 to 13 receiving, by way of its first end, the signals amplified in the repeater.

15. The system of claim 14, **characterised by** a fibre of substantially constant dispersion connected to the second end of said fibre.

## Patentansprüche

1. Optischer Faser, welche an ihrem ersten Ende eine chromatische Dispersion bei 1550 nm, welche zwischen +6 und +17 ps/(nm.km) enthalten ist, aufweist, wobei die chromatische Dispersion entlang der Faser kontinuierlich variiert,
**dadurch gekennzeichnet, dass**
die Faser an ihrem zweiten Ende eine chromatische Dispersion bei 1550 nm aufweist, welche zwischen +3 und +14 ps/(nm.km) enthalten ist, wobei die Differenz zwischen der chromatischen Dispersion am ersten Ende der Faser und der chromatischen Dispersion am zweiten der Faser größer oder gleich 2,5 ps/(nm.km) ist, und dass die Faser an jedem Punkt ein rechteckförmiges Indexprofil mit einem niedergedrückten Abschnitt und einem Ring aufweist, wobei die Radien des Rechtecks, des niedergedrückten Abschnitts und des Rings entlang der Faser identisch sind.

2. Faser gemäß Anspruch 1, **dadurch gekennzeichnet, dass** sie benachbart zu dem erstem Ende einen ersten Abschnitt aufweist, in welchem die chromatische Dispersion im Mittel größer oder gleich 6 ps/(nm.km) ist.

3. Faser gemäß Anspruch 2, **dadurch gekennzeichnet, dass** der erste Abschnitt eine Länge größer oder gleich 10 km aufweist.

4. Faser gemäß Anspruch 2 oder 3, **dadurch gekennzeichnet, dass** die Rate der longitudinalen Variation der chromatischen Dispersion in dem ersten Abschnitt zwischen -1,4 und +0,1 ps/(nm.km²) enthalten ist.

5. Faser gemäß einem der Ansprüche 1 bis 4, **dadurch gekennzeichnet, dass** die Rate der Variation der chromatischen Dispersion entlang der Faser im Wesentlichen konstant ist.

6. Faser gemäß Anspruch 5, **dadurch gekennzeichnet, dass** die Rate einen Wert enthalten zwischen -1,4 und -0,05 ps/(nm.km²) aufweist.

7. Faser gemäß einem der Ansprüche 1 bis 4, **dadurch gekennzeichnet, dass** die Variation der chromatischen Dispersion im Wesentlichen vollständig in einem Abschnitt der Faser vonstatten geht, welcher eine Länge kleiner als die gesamte Länge der Faser aufweist.

8. Faser gemäß Anspruch 7, **dadurch gekennzeichnet, dass** die Länge des Abschnitts der Faser, in welchem die chromatische Dispersion abfällt, zwischen 10 und 35 km enthalten ist.

9. Faser gemäß Anspruch 8, **dadurch gekennzeichnet, dass** die Rate der longitudinalen Variation der chromatischen Dispersion in dem Teil der Faser, in dem die chromatische Dispersion abfällt, zwischen -1,4 und -0,07 ps/(nm.km²) enthalten ist.

10. Faser gemäß Anspruch 7, **dadurch gekennzeichnet, dass** die Länge des Abschnitts der Faser, in welchem die chromatische Dispersion abfällt, zwischen 1 und 5 km enthalten ist.

11. Faser gemäß Anspruch 10, **dadurch gekennzeichnet, dass** die Rate der longitudinalen Variation der chromatischen Dispersion in dem Teil der Faser, in dem die chromatische Dispersion abfällt, zwischen -14 und -0,5 ps/(nm.km²) enthalten ist.

12. Faser gemäß einem der Ansprüche 1 bis 4 und 7 bis 11, **dadurch gekennzeichnet, dass** die benachbart zu ihrem zweiten Ende einen zweiten Abschnitt aufweist, in welchem die chromatische Dispersion kleiner oder gleich 14 ps/(nm.km) ist.

13. Faser gemäß Anspruch 12, **dadurch gekennzeichnet, dass** der zweite Abschnitt eine Länge größer oder gleich 1 km aufweist.

14. Übertragungssystem mit mindestens einem Repeater, wobei eine Faser gemäß einem der Ansprüche 1 bis 13 an ihrem ersten Ende die von dem Repeater verstärkten Signale empfängt.

15. Übertragungssystem gemäß Anspruch 14, **gekennzeichnet durch** eine Faser mit im Wesentlichen konstanter Dispersion, welche mit dem zweiten Ende der besagten Faser verbunden ist.
